# EUROPEAN PATENT SPECIFICATION

(11) **EP 4 246 052 B1**
(45) Date of publication and mention of the grant of the patent: **29.04.2026**
(21) Application number: 23460008.8
(22) Date of filing: 08.03.2023
(51) Int. Cl.: F24H 9/00, F24H 1/28

(54) **COGENERATION BOILER**
HEIZKESSEL FÜR KOGENERATION
CHAUDIÈRE DE COGÉNÉRATION

(30) Priority: 15.03.2022 PL 44063722
(43) Date of publication of application: 20.09.2023
(73) Proprietor: AIC Spólka Akcyjna, 81-577 Gdynia (PL)
(72) Inventor: Siemienczuk, Tomasz, 80-351 Gdansk (PL); Kuzma, Mariusz, 81-757 Sopot (PL); Ronewicz, Karol, 80-126 Gdansk (PL)
(74) Representative: Pomianek, Grazyna

(56) References cited:
- WO-A1-2005/043061
- WO-A1-2006/105605
- CN-U- 206 989 464
- FR-A1- 2 994 729
- JP-A- 2002 286 379
- US-A- 5 309 987
- US-B2- 11 204 190

## Description

The invention concerns a cogeneration boiler, designated for central heating or domestic water installations and electric installations, especially of the domestic type.

Cogeneration means combined production of electric energy and heat.

The known cogeneration systems for boilers are not optimised for application in home installations.

The described invention solves the problem of developing a structure of a boiler intended for central heating or domestic water installations and capable of producing electric energy whilst being a single device of high heat efficiency.

Konwn from patent document WO 2019/123305 A1 is cogeneration system for a boiler comprising a boiler able to heat water for domestic use, a combustor placed into the boiler, a compressor, a heat exchanger for the exchange of thermal energy between the combustion fumes generated in the combustor and a fluid coming from the compressor, a gas turbine, a current generator and a current converter able to generate electric energy, a main fumes/water exchanger able to recover the thermal energy.

Konwn from patent document DE 10 2009 057 100 A1 is an aggregate for power-heat coupling for small residential units, having a gas turbine, a compressor and a generator, where an expander of the gas turbine, the compressor and the generator are arranged on a common shaft.

Konwn from patent document WO 2014/029933 A1 is a micro-cogeneration device suitable for biomass boilers, and relates to a domestic device for the cogeneration of electricity and heat, suitable for extracting heat energy from a biomass boiler. Biomass boiler comprises a furnace, a chamber in contact with the furnace, and substantially tubular cavities arranged close to the outer periphery of the chamber, and device comprises a first heat exchanger forming an evaporator, an electric generator capable of generating electricity from a driving thermodynamic cycle, a second heat exchanger being connected to said domestic heating circuit.

US 11 204 190 B2 discloses an evaporator with integrated heat recovery which incorporates a vapour tube in a combustion chamber surrounded by water jacket. The evaporator may incorporate a condenser within the housing and in fluid communication with the exhaust gas heat exchanger and/or water jacket.

In accordance with the described invention, a cogeneration boiler comprising an external jacket, boiler/domestic water inlet and outlet stub pipes, an internal jacket with a layer of thermal insulation encased inside of which there is a combustion chamber with an evaporator placed therein, where an outlet of the evaporator is linked to an inlet of a turbogenerator, a condenser with an inlet which is linked to an outlet of the said turbogenerator and an outlet which is linked to an inlet of the evaporator via a pump, the said combustion chamber features a lid with an opening for a burner and is linked to a flue gas pipes of a boiler water/domestic water heater fitted with a flue gas outlet stub pipe, wherein the flue gas pipes of the said boiler water/domestic water heater are placed in a water chamber of the heater and on the one end are fixed in a sieve bottom of the combustion chamber and on the other end in a sieve bottom of the said boiler water/domestic water heater, is characterised in that between the internal jacket of the combustion chamber and the external jacket of the boiler there is a chamber with the condenser placed therein, and where the said water chamber of the boiler water/domestic water heater is linked to the chamber in which the condenser is placed, wherein the boiler water/domestic water heater has two transverse sieve partitions: a top one and a bottom one, where the top transverse sieve partition is placed under the sieve bottom of the combustion chamber, while the bottom transverse sieve partition is placed above the sieve bottom of the water heater, where between the said transverse top and bottom sieve partitions there is an internal jacket of the said boiler water/domestic water heater linked to the said sieve partitions, and where between the said bottom transverse sieve partition and the sieve bottom of the said water heater there is a boiler water/domestic water distributor linked to the inlet stub pipe for the boiler/domestic water.

Preferably, the evaporator takes the form of a pipe coil which preferably is of various cross sections along its entire length, where the cross section increases in the direction in which the working agent flows through the said pipe coil. Preferably there is one element directing the flow of the flue gases fitted in the combustion chamber.

Preferably, the condenser takes the form of a pipe coil.

Preferably, fitted in the chamber where the condenser pipe coil is placed is at least one helical partition (having the shape of a helix) with openings.

Preferably, the boiler water/domestic water distributor has an internal jacket with openings/slits.

Preferably, between the sieve bottom of the combustion chamber and the bottom transverse sieve partition of the boiler water/domestic water heater, on the outside of the internal jacket of the boiler water/domestic water heater, there is an external jacket of the boiler water/domestic water heater featuring openings/slits which link the water chamber of the water heater to the chamber in which the condenser is placed.

The described cogeneration boiler enables reduction of the space occupied by the devices which heat the rooms/domestic water while simultaneously generating electric energy, it also allows to eliminate the potential points of leakage at the threaded connections between the individual exchangers in the Rankine cycle, in which the working agent needs to work in vacuum. Moreover, the special structure of the evaporator composed of the pipe coil of the diameter increasing in the direction of the flow of the working agent makes it possible to ensure low flow resistance and stability of the working agent evaporation process, and in particular guarantees there are no fluctuations/surges of pressure of the produced vapour or of the volume intensity of the flow, it also eliminates the possibility of back pressure build-up at the turbogenerator inlet thanks to the gradual increase of the volume of space accessible to the produced vapour.

Illustrative embodiments of the subject matter of the invention are presented on a drawings, where:
Fig. 1 shows the cogeneration boiler in a perspective view partially in cross section;
Fig. 2 presents the cogeneration boiler in axial section;
Fig. 2a depicts the cogeneration boiler as in Fig. 2 with the flow of the boiler/domestic water (thicker arrows) and the flow of the working agent (thinner arrows) in the evaporator schematically marked thereon;
Fig. 3 shows the cogeneration boiler in a bird's eye view;
Fig. 4 presents the evaporator coil pipe in a perspective view;
Fig. 5 depicts the helical partitions;
Fig. 6 shows the working agent flow diagram.

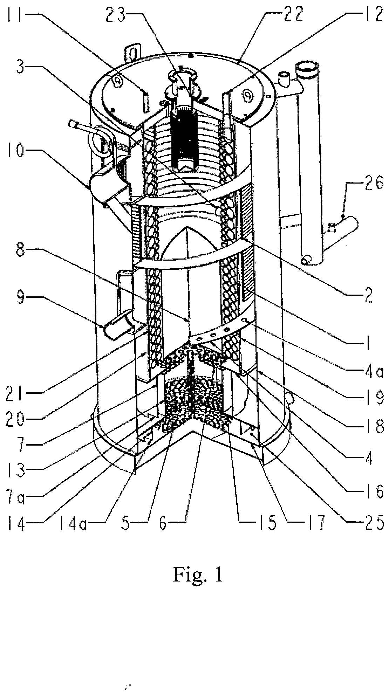

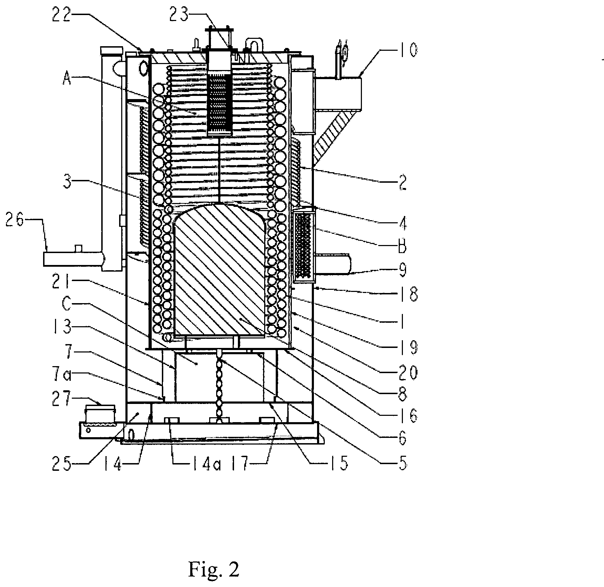

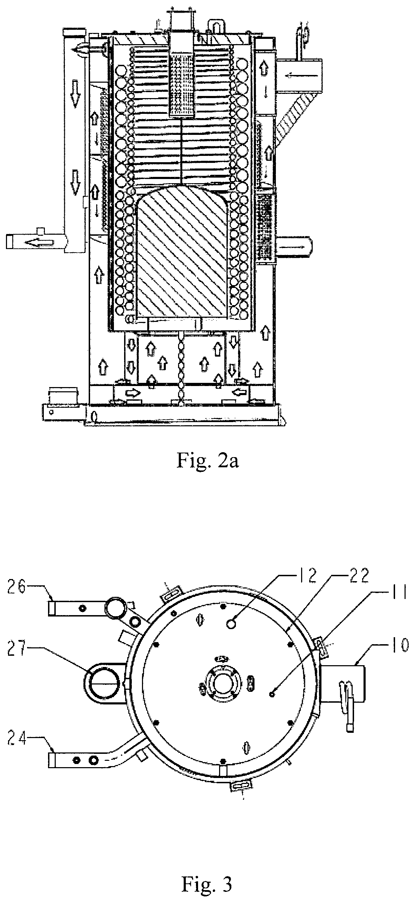

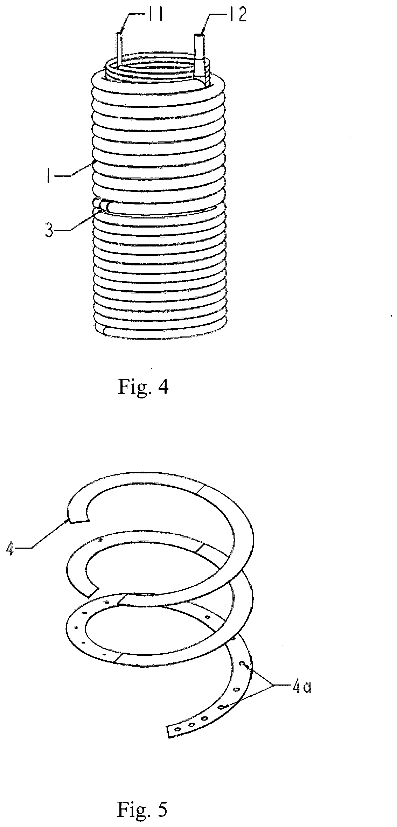

The illustrative embodiment of the cogeneration boiler (Fig. 1 to Fig. 5) incorporates an external jacket 18, an inlet stub pipe 24 and outlet stub pipe 26 for the boiler/domestic water. Inside the external jacket there is an internal jacket 21 of the combustion chamber A, fitted with a thermal insulation layer 19 placed between the said internal jacket 21 and the external jacket 20 of the combustion chamber A. The combustion chamber A has a lid 22 featuring an opening 23 for the burner. Placed in the combustion chamber A is an evaporator 1 in the form of a pipe coil made up of sections of different cross sections joined together with a connector 3. The sections of the said pipe coil of the evaporator 1 are arranged so that their cross sections increase in the direction in which the working agent flows through the said pipe coil, and where the outlet 12 of the said pipe coil of the evaporator 1 is linked to the turbogenerator inlet. The combustion chamber A is linked to the flue gas pipes 5 of the boiler water/domestic water heater fitted with an outlet stub pipe 27 for the flue gases. Between the internal jacket 21 of the combustion chamber A and the external jacket 18 of the boiler there is a chamber B with a condenser 2 in the form of a pipe coil placed therein, where the pipe coil inlet 10 is linked to the turbogenerator outlet, while the outlet 9 of the condenser 2 is linked to the inlet 11 of the pipe coil of the evaporator 1 via a pump placed in the container for the condensed working agent (condensed water). In the said chamber B where the pipe coil of the evaporator 2 is placed there is at least one helical partition 4 featuring openings 4a. The flue gas pipes 5 of the said boiler water/domestic water heater are placed in the heater water chamber C and on the one end are fixed in the sieve bottom 16 of the combustion chamber A, and on the other end in the sieve bottom 17 of the said boiler water/domestic water heater. Fitted in the combustion chamber A is the direction element 8 which directs the flow of the flue gases. The water chamber C of the boiler water/domestic water heater is linked to the chamber B where the condenser 2 is placed. The boiler water/domestic water heater has two transverse sieve partitions 6, 15 (top and bottom, respectively), where the top transverse sieve partition 6 is placed under the sieve bottom 16 of the combustion chamber A, and the bottom transverse sieve partition 15 is placed above the sieve bottom 17 of the water heater. Between the said transverse sieve partitions 6, 15 (top and bottom, respectively), there is the internal jacket 13 of the said boiler water/domestic water heater, where the internal jacket 13 is linked to the sieve partitions 6, 15, and between the said bottom transverse sieve partition 15 and sieve bottom 17 of the said water heater there is a distributor 25 of the boiler/domestic water linked to the inlet stub pipe 24 of the boiler/domestic water. The distributor 25 of the boiler/domestic water has an internal jacket 14 featuring openings/slits 14a. Between the sieve bottom 16 of the combustion chamber A and the bottom transverse sieve partition 15 of the boiler water/domestic water heater outside the internal jacket 13 of the boiler water/domestic water heater there is its external jacket 7 featuring openings/slits 7a which link the water chamber C of the water heater to the chamber B where the evaporator 2 is placed.

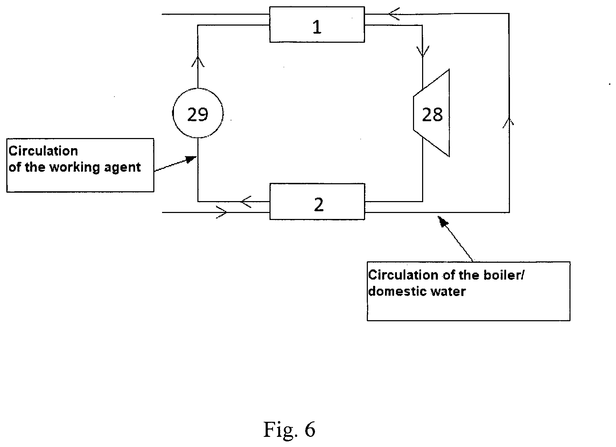

The circulation of boiler/domestic water and the circulation of the working (thermodynamic) agent in the Rankine cycle is as follows (Fig. 6). The flue gases which form in the combustion chamber A are directed to the flue gas pipes 5 by the directing element 8, and from there they are directed to the outlet stub pipe 27.

The boiler/domestic water flows via the inlet stub pipe 24 into the distributor 25, and then through the openings/slits 14a of the internal jacket 14 of the distributor into the space between the sieve bottom 17 of the water heater and its bottom transverse sieve partition 15, following which it is forced by the pressure to flow through the openings in the said sieve partition 15 around the hot flue gas pipes 5 from where it gets to the water chamber C of the boiler water/domestic water heater and then flows towards the top sieve partition 6 around the hot flue gas pipes 5 and through the openings in the top sieve partition 6 towards the sieve bottom 16 of the combustion chamber, flowing around the hot flue gas pipes 5, following which it flows down to the space between the internal jacket 13 of the boiler water/domestic water heater and its external jacket 7 and through the openings 7a in the said jacket it flows into the chamber B where the condenser 2 is placed and the pressure forces its flow up through the openings 4a in the helical partition 4 around the hot condenser 2. The heated boiler/domestic water leaves the boiler via the outlet stub pipe 26. At the same time, the working agent (water) in the Rankine cycle is heated in the pipe coil of the evaporator 1 by the hot flue gases which form in the combustion chamber A, and gets evaporated, where the obtained vapour is characterised by high overheating temperature; the overheated vapour is directed via the outlet 12 of the evaporator 1 to the turbogenerator 28, where it gets decompressed and gives away some of its energy, thus driving the turbine, from where it is directed to the inlet 10 of the pipe coil of the condenser 2. While flowing through the condenser 2, the working agent vapour gives away its heat to the boiler/domestic water flowing around it in counter current, while the vapour itself gets condensed. The condensed working agent (water) flows out of the condenser 2 via the outlet 9 to the container from where the pump 29 directs it again to the inlet 11 of the pipe coil of the evaporator 1.

In effect, the burning of the gas results in generation of electricity and production of hot water used for central heating or domestic purposes.

### List of numerical references

1 - pipe coil of the evaporator
2 - pipe coil of the condenser
3 - connector between two different diameters of the pipe coil of the evaporator
4 - helical partition
4a - openings in the helical partition
5 - flue gas pipes of the boiler water/domestic water heater
6 - top transverse sieve partition of the boiler water/domestic water heater
7 - external jacket of the boiler water/domestic water heater
7a - openings in the external jacket of the boiler water/domestic water heater
8 - element directing the flue gases
9 - condenser outlet
10 - condenser inlet
11 - evaporator inlet
12 - evaporator outlet
13 - internal jacket of the boiler water/domestic water heater
14 - internal jacket of the boiler water/domestic water distributor
14a - openings in the internal jacket of the boiler water/domestic water distributor
15 - bottom transverse sieve partition of the boiler water/domestic water heater
16 - sieve bottom of the combustion chamber
17 - sieve bottom of the boiler water/domestic water heater
18 - external jacket of the boiler
19 - thermal insulation layer
20 - external jacket of the combustion chamber
21 - internal jacket of the combustion chamber
22 - lid of the combustion chamber
23 - opening for the burner
24 - inlet stub pipe for the boiler/domestic water
25 - boiler water/domestic water distributor
26 - outlet stub pipe for the boiler/domestic water
27 - stub pipe for the flue gases
28 - turbogenerator
29 - pump
A - combustion chamber
B - chamber where the condenser is placed
C - water chamber of the boiler water/domestic water heater

## Claims

1. Cogeneration boiler comprising an external jacket (18), a boiler/domestic water inlet stub pipe (24) and an outlet stub pipe (26), an internal jacket (21) with a layer of thermal insulation (19) encased inside of which there is a combustion chamber (A) with an evaporator (1) placed therein, where an outlet (12) of the evaporator (1) is linked to an inlet of a turbogenerator (28), a condenser (2) with an inlet (10) which is linked to an outlet of the said turbogenerator (28) and an outlet (9) which is linked to an inlet (11) of the evaporator (1) via a pump, the said combustion chamber (A) features a lid (22) with an opening (23) for a burner and is linked to a flue gas pipes (5) of a boiler water/domestic water heater fitted with a flue gas outlet stub pipe (27), wherein the flue gas pipes (5) of the said boiler water/domestic water heater are placed in a water chamber (C) of the heater and on the one end are fixed in a sieve bottom (16) of the combustion chamber (A) and on the other end in a sieve bottom (17) of the said boiler water/domestic water heater, **characterised in that** between the internal jacket (21) of the combustion chamber (A) and the external jacket (18) of the boiler there is a chamber (B) with the condenser (2) placed therein, and where the said water chamber (C) of the boiler water/domestic water heater is linked to the chamber (B) in which the condenser (2) is placed, wherein the boiler water/domestic water heater has two transverse sieve partitions: a top one (6) and a bottom one (15), where the top transverse sieve partition (6) is placed under the sieve bottom (16) of the combustion chamber (A), while the bottom transverse sieve partition (15) is placed above the sieve bottom (17) of the water heater, where between the said transverse top and bottom sieve partitions (6, 15) there is an internal jacket (13) of the said boiler water/domestic water heater linked to the said sieve partitions (6, 15), and where between the said bottom transverse sieve partition (15) and the sieve bottom (17) of the said water heater there is a boiler water/domestic water distributor (25) linked to the inlet stub pipe (24) for the boiler/domestic water.

2. The boiler according to Claim 1, **characterised in that** the evaporator (1) takes the form of a pipe coil.

3. The boiler according to Claim 2, **characterised in that** pipe coil of the evaporator (1) is of various cross sections along its entire length, where the cross section increases in the direction in which the working agent flows through the said pipe coil.

4. The boiler according to Claims 1 or 2, **characterised in that** there is one element (8) directing the flow of the flue gases fitted in the combustion chamber (A).

5. The boiler according to Claim 1, **characterised in that** the condenser (2) takes the form of a pipe coil.

6. The boiler according to Claim 5, **characterised in that** fitted in the chamber (B) where the pipe coil of the condenser (2) is placed is at least one helical partition (4) with openings (4a).

7. The boiler according to Claim 1, **characterised in that** the boiler/domestic water distributor (25) has an internal jacket (14) with openings/slits (14a).

8. The boiler according to Claim 1, **characterised in that** between the sieve bottom (16) of the combustion chamber (A) and the bottom transverse sieve partition (15) of the boiler water/domestic water heater, on the outside of the internal jacket (13) of the boiler water/domestic water heater, there is an external jacket (7) of the boiler water/domestic water heater featuring openings/slits (7a) which link the water chamber (C) of the water heater to the chamber (B) in which the condenser (2) is placed.

## Patentansprüche

1. Heizkessel für Kogeneration mit einem Außenmantel (18), einem Einlaufstutzen (24), einem Auslaufstutzen (26) für Kessel-/Betriebswasser, mit einem Innenmantel (21), der mit einer Wärmedämmschicht (19) versehen ist und in dem eine Verbrennungskammer (A) untergebracht ist, in der ein Verdampfer (1) angeordnet ist, wobei der Auslauf (12) des Verdampfers (1) mit dem Einlauf zum erwähnten Turbogenerator (28) verbunden ist, mit einem Kondensator (2) mit einem Einlauf (10), der mit dem Auslauf des erwähnten Turbogenerators (28) verbunden ist, und einem Auslauf (9), der über eine Pumpe mit dem Einlauf (11) des Verdampfers (1) verbunden ist, wobei die erwähnte Verbrennungskammer (A) einen Deckel (22) mit einer Öffnung (23) für den Brenner aufweist und mit den Rauchgasrohrleitungen (5) des erwähnten Kessel-/Betriebswassererhitzers verbunden ist, der mit einem Rauchgasauslass (27) versehen ist, wobei die Rauchgasrohrleitungen (5) des Kessel-/Betriebswassererhitzers in der Wasserkammer (C) des Kessels angeordnet sind und auf einer Seite im Rohrboden (16) der Verbrennungskammer (A) und auf der anderen Seite im Rohrboden (17) des erwähnten Kessel-/Betriebswassererhitzers befestigt sind, **dadurch gekennzeichnet, dass** zwischen dem Innenmantel (21) der Verbrennungskammer (A) und dem Außenmantel (18) des Kessels eine Kammer (B) gebildet wird, in der der Kondensator (2) angeordnet ist, und wobei die erwähnte Wasserkammer (C) des Kessel-/Betriebswassererhitzers mit der Kammer (B) verbunden ist, in der der Kondensator (2) angeordnet ist, wobei der Kessel-/Betriebswassererhitzer zwei querverlaufende Rohrwände aufweist: eine obere (6) und eine untere (15), wobei die obere, querverlaufende Rohrwand (6) unter dem Rohrboden (16) der Verbrennungskammer (A) und die untere, querverlaufende Rohrwand (15) über dem Rohrboden (17) des Kessel-/Betriebswassererhitzers angeordnet ist, wobei zwischen den erwähnten querverlaufenden Rohrwänden (6, 15) ein Innenmantel (13) des erwähnten Kessel-/Betriebswassererhitzers angeordnet ist, der mit den erwähnten Rohrwänden (6, 15) verbunden ist, und zwischen der unteren, querverlaufenden Rohrwand (15) und dem Rohrboden (17) des erwähnten Wassererhitzers ein Verteiler (25) für Kessel-/Betriebswasser vorhanden ist, der mit dem Einlaufstutzen (24) des Kessel-/Betriebswassererhitzers verbunden ist.

2. Kessel nach Anspruch 1, **dadurch gekennzeichnet, dass** der Verdampfer (1) die Form einer Schlange aufweist.

3. Kessel nach Anspruch 2, **dadurch gekennzeichnet, dass** die Schlange des Verdampfers (1) entlang ihrer Länge unterschiedliche Querschnittsflächen aufweist, wobei die Querschnittsfläche in der Strömungsrichtung der Betriebsflüssigkeit durch die erwähnte Schlange größer wird.

4. Kessel nach Anspruch 1 oder 2, **dadurch gekennzeichnet, dass** in der Verbrennungskammer (A) ein Lenkelement (8) angeordnet ist, das den Abgasstrom lenkt.

5. Kessel nach Anspruch 1, **dadurch gekennzeichnet, dass** der Kondensator (2) die Form einer Schlange aufweist.

6. Kessel nach Anspruch 5, **dadurch gekennzeichnet, dass** die Kammer (B), in der sich die Schlange des Kondensators (2) befindet, mindestens eine schraubenförmige Trennwand (4) aufweist, die mit Öffnungen (4a) versehen ist.

7. Kessel nach Anspruch 1, **dadurch gekennzeichnet, dass** der Verteiler (25) von Kessel-/Betriebswasser einen Innenmantel (14) aufweist, der mit Öffnungen/Schlitzen (14a) versehen ist.

8. Kessel nach Anspruch 1, **dadurch gekennzeichnet, dass** zwischen dem Rohrboden (16) der Verbrennungskammer (A) und der querverlaufenden unteren Rohrwand (15) des Kessel-/Betriebswassererhitzers außerhalb des Innenmantels (13) des Kessel-/Betriebswassererhitzers ein Außenmantel (7) des Kessel-/Betriebswassererhitzers angeordnet ist, der mit Öffnungen/Schlitzen (7a) versehen ist, die die Wasserkammer (C) des Wassererhitzers mit der Kammer (B) verbinden, in dem der Kondensator (2) angeordnet ist.

## Revendications

1. Chaudière de cogénération comprenant une enveloppe extérieure (18), un raccord d'entrée (24) et un raccord de sortie (26) pour l'eau de chaudière/d'usage, une enveloppe interne (21) pourvue d'une couche d'isolation thermique (19) à l'intérieur de laquelle se trouve une chambre de combustion (A) dans laquelle est situé l'évaporateur (1), où la sortie (12) de l'évaporateur (1) est reliée à l'entrée du turbogénérateur (28), le condenseur (2) avec l'entrée (10) qui est reliée à la sortie dudit turbogénérateur (28) et la sortie (9) qui est reliée à l'entrée (11) de l'évaporateur (1) par une pompe, ladite chambre de combustion (A) comporte un couvercle (22) avec une ouverture (23) pour le brûleur et est reliée aux tuyaux d'échappement (5) du chauffe-eau/chauffe-eau sanitaire, équipé d'un raccord d'échappement (27) pour les gaz d'échappement, les tuyaux d'échappement (5) dudit chauffe-eau de chaudière/d'eau sanitaire sont situés dans la chambre à eau (C) du chauffe-eau et sont fixés d'un côté au fond perforé (16) de la chambre de combustion (A) et de l'autre côté au fond perforé (17) dudit chauffe-eau de chaudière/d'eau sanitaire, **caractérisé en ce qu'**entre l'enveloppe interne (21) de la chambre de combustion (A) et l'enveloppe externe (18) de la chaudière se trouve une chambre (B) dans laquelle est situé le condenseur (2), et où ladite chambre à eau (C) du chauffe-eau de la chaudière/eau sanitaire est reliée à la chambre (B) dans laquelle est situé le condenseur (2), le chauffe-eau de chaudière/sanitaire comportant deux cloisons transversales perforées: supérieure (6) et inférieure (15), la cloison transversale supérieure (6) étant située sous le fond perforé (16) de la chambre de combustion (A), et la cloison transversale inférieure (15) étant située au-dessus du fond perforé (17) du réchauffeur d'eau de chaudière/sanitaire, entre lesdites cloisons transversales perforées (6, 15) supérieure et inférieure se trouve une enveloppe interne (13) dudit chauffe-eau/chauffe-eau sanitaire reliée auxdites cloisons perforées (6, 15), et entre la cloison transversale inférieure (15) et le fond perforé (17) dudit chauffe-eau se trouve un distributeur (25) d'eau de chaudière/d'eau sanitaire relié au raccord d'entrée (24) d'eau de chaudière/d'eau sanitaire.

2. Chaudière selon la revendication 1, **caractérisée en ce que** l'évaporateur (1) se présente sous la forme d'un serpentin.

3. Chaudière selon la revendication 2, **caractérisé en ce que** le serpentin de l'évaporateur (1) présente une section transversale variable sur sa longueur, cette section augmentant dans le sens de l'écoulement du fluide de travail à travers ledit serpentin.

4. Chaudière selon la revendication 1 ou 2, **caractérisé en ce que** dans la chambre de combustion (A) est situé un élément (8) dirigeant le flux des gaz d'échappement.

5. Chaudière selon la revendication 1, **caractérisé en ce que** le condenseur (2) se présente sous la forme d'un serpentin.

6. Chaudière selon la revendication 5, **caractérisé en ce que** dans la chambre (B) dans laquelle est situé le serpentin du condenseur (2) se trouve au moins une cloison (4) en forme d'hélice, pourvue d'ouvertures (4a).

7. Chaudière selon la revendication 1, **caractérisé en ce que** le distributeur (25) d'eau de chaudière/d'eau sanitaire comporte une enveloppe interne (14) pourvue d'ouvertures/fentes (14a).

8. Chaudière selon la revendication 1, **caractérisé en ce qu'**entre le fond perforé (16) de la chambre de combustion (A) et la cloison transversale inférieure perforée (15) du chauffe-eau de chaudière/d'eau sanitaire, à l'extérieur de l'enveloppe intérieure (13) du chauffe-eau de chaudière/d'eau sanitaire, se trouve une enveloppe extérieure (7) du chauffe-eau de chaudière/d'eau sanitaire, pourvu d'ouvertures/fentes (7a) reliant la chambre à eau (C) du chauffe-eau à la chambre (B) dans laquelle est situé le condenseur (2).
